# EUROPÄISCHE PATENTSCHRIFT

(11) **EP 1 050 186 B1**
(45) Veröffentlichungstag und Bekanntmachung des Hinweises auf die Patenterteilung: **19.09.2001**
(21) Anmeldenummer: 99945711.2
(22) Anmeldetag: 14.01.1999
(51) Int. Cl.: H04Q 11/04

(54) **KOMMUNIKATIONSNETZ, VERFAHREN ZUM ÜBERTRAGEN EINES SIGNALS, NETZVERBINDUNGSEINHEIT UND VERFAHREN ZUM ANPASSEN DER DATENRATE EINES SKALIERTEN DATENSTROMS**
COMMUNICATION NETWORK, METHOD FOR TRANSMITTING A SIGNAL, NETWORK CONNECTING UNIT AND METHOD FOR ADJUSTING THE BIT RATE OF SCALED DATA FLOW
RESEAU DE COMMUNICATION, METHODE POUR TRANSMETTRE UN SIGNAL, UNITE DE CONNEXION AU RESEAU ET METHODE D'AJUSTEMENT DU DEBIT LINAIRE D'UN FLUX ECHELONNE DE DONNEES

(30) Priorität: 05.02.1998 DE 19804564
(43) Veröffentlichungstag der Anmeldung: 08.11.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: Hutzelmann, Holger, 81245 München (DE); Klöcking, Jens-Uwe, 80687 München (DE); Zeller, Markus, 86420 Diedorf (DE); Steckenbiller, Helmut, 84036 Landshut (DE); Knorr, Rudi, 82140 Olching (DE)
(74) Vertreter: Schoppe, Fritz, Dipl.-Ing.
(86) Internationale Anmeldenummer: EP9900186
(87) Internationale Veröffentlichungsnummer: WO9940753

(56) Entgegenhaltungen:
- EP-A- 0 719 055
- US-A- 5 515 377
- US-A- 5 600 646

## Beschreibung

Die vorliegende Erfindung bezieht sich auf Kommunikationssysteme und insbesondere auf multiskalierbare Kommunikationsnetze, in denen unabhängig von einzelnen Netzgegebenheiten durch Bereitstellen und Verarbeiten eines skalierten Datenstroms eine netzübergreifende Kommunikation auf effiziente Art und Weise möglich ist.

In der Zukunft wird ein Zusammenwachsen der derzeitigen, nebeneinander existierenden Kommunikationsnetze die Hauptaufgabe der Kommunikationsindustrie sein. Dabei wird der Anspruch nach Mobilität, mehr Komfort für den Anwender sowie die Forderung nach dauernder Erreichbarkeit die treibende Kraft sein. Ziel moderner und flexibler Kommunikationssysteme ist es, jedem Teilnehmer Informationsdienste zu jedem Zeitpunkt zur Verfügung zu stellen, um an jedem Ort der Welt in Text, Ton und Bild kommunizieren zu können. Dabei wird die Endgeräte- und Netzlandschaft (insbesondere im Teilnehmerbereich) auch in Zukunft sehr heterogen bleiben. Für die Implementierung innovativer Szenarien, wie z. B. mobiles Büro, Telelearning, Homeworking und globales Informationssystem, ist es deshalb notwendig, eine netzübergreifende audiovisuelle Kommunikation sowie netzübergreifende Datendienste bereitzustellen. Ein Beispiel für ein solches Szenario ist eine gleichzeitige Videokonferenz mit Mobiltelephon (GSM) und PC (LAN) und Schmalband/Breitband-Terminal (ISDN, ATM).

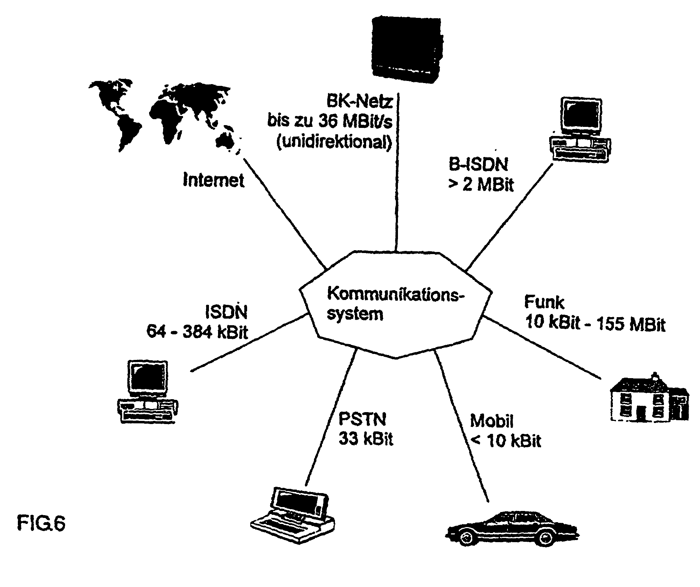

Fig. 6 zeigt einen Ausschnitt der Vielzahl von derzeit existierenden Netzen, die sämtlich über ein Kommunikationssystem verbunden sind. Fig. 6 zeigt außerdem die jeweilige Datenrate, die ein Netz zuläßt. Es ist ersichtlich, daß sich die einzelnen Netze erheblich in der zu verwendenden Datenrate unterscheiden, wobei das Autotelephon-Netz lediglich eine Datenrate von kleiner als 10 kBit erlaubt, während mittels eines ultraschnellen Funknetzes eine Datenübertragung von bis zu 155 MBit implementiert werden kann. Das Internet hat keine feste Datenrate, da sich die Datenrate im Internet dynamisch ändert und daher sehr gering sein kann, wenn viele Teilnehmer anwesend sind, während dieselbe beträchtliche Werte annehmen kann, wenn das Internet relativ frei ist.

Bereits heute existieren Vorrichtungen, mit denen es möglich ist, die in Fig. 6 gezeigten Netze mit derart unterschiedlichen Datenraten zu verbinden. Diese Vorrichtungen werden auch als "Gateways" bezeichnet. Diese Gateways bieten prinzipiell immer die Möglichkeit, verschiedene Netze miteinander zu verbinden, beispielsweise bei Videokonferenzen. Die bekannten Gateways überwinden den Nachteil heutiger Kommunikationssysteme, wie z. B. Telephonnetz, Mobilnetz, Internet, daß sie nebeneinander existieren und nur bedingt eine Kommunikation mit Teilnehmern in anderen Netzen ermöglichen.

Heute bekannte Gateways sind immer von der jeweiligen Anwendung abhängig. Die bekannten Gateways, welche beispielsweise zwischen einem ersten Netz mit hoher Datenrate und einem zweiten Netz mit geringerer Datenrate geschaltet sind, führen eine Decodierung des Datenstroms mit hoher Datenrate durch, führen dann eine Zwischenverarbeitung, wie z. B. eine Formatkonvertierung, eine Mischung von Audiosignalen oder eine Erzeugung eines Konferenzbildes durch, und codieren den entsprechenden Datenstrom wieder derart, daß er über das zweite Netz mit geringerer Datenrate übertragen werden kann. Dieser Schritt wird auch als Transcodierung oder Umsetzung bezeichnet. Diese Transcodierung oder Umsetzung ist notwendig, da die heute verwendeten Audio- und Videostandards in der Regel an die Bandbreite des Netzes angepaßt sind, um optimale Qualität bei höchster Codiereffizienz zu erzielen. Diese Gateways sind jedoch äußerst rechenaufwendig und komplex, was sowohl bei der Entwicklung als auch während des Betriebs (Wartung, Anpassung an sich ändernde Anwendungen, usw.) zu hohen Kosten führt. Weiterhin sind sie sehr unflexibel, da die Verbindung der Netze auf Anwendungsebene vollzogen wird und damit anwendungsabhängig ist.

Im nachfolgenden sei kurz auf ein Beispiel für ein herkömmliches Gateway eingegangen, um die Anwendungsabhängigkeit zu illustrieren. Es sei ein Audiocodierer betrachtet, der nach einem bekannten MPEG-Standard arbeitet. Derselbe kann implementiert sein, um ein Ausgangssignal mit einer Datenrate von beispielsweise 50 kBit pro Sekunde zu liefern. Diese Datenrate kann für ein lokales Netz (LAN) geeignet sein, das eine solche Datenrate zuläßt. Soll das codierte Audiosignal jedoch in ein Funktelephonnetz nach dem GSM-Standard eingespeist werden, so ist die Datenrate viel zu hoch, da mobile Telephon-Datenraten höchstens 10 kBit/s betragen dürfen. An der Schnittstelle zwischen dem LAN und dem Mobilfunknetz ist daher ein Gateway erforderlich. Dieses Gateway muß hierbei einen kompletten Audio-Decodierer, einen kompletten AudioCodierer sowie die entsprechenden Einrichtungen für die Zwischenverarbeitung haben, wobei der Audio-Codierer/Decodierer das Signal mit hoher Datenrate vollständig decodiert und dann wieder codiert, um ein Ausgangssignal zu erzeugen, das über das Mobilfunknetz übertragen werden kann. Neben der Tatsache, daß das Decodieren, die Zwischenverarbeitung und das anschließende Codieren sehr rechenleistungsaufwendig ist und Zeit benötigt, kann auch durch diese Art des häufigen Decodierens und Wiedercodierens, wenn an mehrere verschiedene Netze zwischen einem Sender und einem Empfänger gedacht wird, zusätzliche Codierfehler einführen, die allein aufgrund der Tatsache entstehen, daß ein häufiges Decodieren und Wiedercodieren notwendig ist. Dieses Beispiel zeigt ferner die Anwendungsabhängigkeit. Soll nun über das LAN ein Videosignal übertragen werden, so ist dies nicht mit dem gleichen Gateway möglich, sondern lediglich mit einem Gateway, das einen Video-Codierer/Decodierer besitzt. Sollen Daten übertragen werden, so kann in dem Gateway weder ein Audiocodierer noch ein Videocodierer eingesetzt werden, sondern ein Daten-Transcodierer. Ferner wird darauf hingewiesen, daß, wenn z. B. Audio- oder Videosignale mit einem neueren Codierverfahren bearbeitet werden, auch die Transcodierer in sämtlichen betroffenen Gateways ersetzt werden müssen.

Zusammengefaßt läßt sich also feststellen, daß gegenwärtige Gateways rechenleistungsaufwendig sind, sehr viel Zeit benötigen, hohe Kosten verursachen und keinerlei Flexibilität besitzen, um auf sich ändernde Anforderungen zu reagieren. Der Hauptgrund für diese Nachteile ist die Tatsache, daß heute bekannte Gateways vollkommen anwendungsabhängig sind, und daß daher bei einer Transcodierung alle ISO-OSI-Schichten durchlaufen werden müssen. Als weiterer Nachteil ist eine sehr unflexible Bandbreiten- bzw. Datenratenverwaltung zu nennen.

Die Fachveröffentlichung "Low-Complexity Video Coding for Receiver-Driven Layered Multicast", in IEEE JOURNAL ON SELECTED AREAS IN COMMUNICATIONS, Band 15, Nr. 6, August 1997, Seiten 983-1001, offenbart ein Kommunikationsnetz mit einem Codierer zum Erzeugen eines skalierten Datenstroms mit zumindest drei Datenschichten, wobei zum Übertragen der ersten Datenschicht eine niedrige Bandbreite benötigt wird, während zum Übertragen der ersten und der zweiten Datenschicht eine mittlere Bandbreite benötigt wird und zum Übertragen aller drei Datenschichten eine hohe Bandbreite benötigt wird. Der Codierer ist mit einem breitbandigen Verteilungsnetz verbunden. Das breitbandige Verteilungsnetz ist über ein schmalbandiges Netz mit einer ISDN-Gateway verbunden, welche wiederum mit Heim-Teilnehmern verbunden ist. Das breitbandige Verteilungsnetz ist darüberhinaus über eine Datenverbindung mittlerer Bandbreite mit einem MBone-Router verbunden, der seinerseits mit dem Internet über eine Datenverbindung mit derselben Bandbreite verbunden ist. Das breitbandige Verteilungsnetz ist schließlich über eine breitbandige Netzverbindung mit Ethernets verbunden. Das Netz leitet nur die Anzahl von Schichten weiter, welche jede physische Verbindung unterstützen kann, indem es in der Lage ist, an jedem Verbindungsengpaß Schichten selektiv zu entfernen. Grundsätzlich ist das Kommunikationsnetz empfängergetrieben, derart, daß die Empfänger nichts über die Sender wissen müssen, derart, daß lediglich der Empfänger bestimmt, wieviele Datenschichten er empfangen möchte. Um festzustellen, wieviele Datenschichten in dem Netz, das zu dem Empfänger führt, übertragen werden können, fordert der Empfänger vom Netz zunächst alle Datenschichten an und reduziert dann seine Anforderungen im Falle einer Netzverstopfung. Falls für längere Zeit keine Netzverstopfung aufgetreten ist, fordert der Empfänger versuchsweise wieder immer mehr Datenschichten an, um immer so viele Datenschichten wie möglich zu empfangen. Die Quelle für die Datenschichten nimmt dabei keine aktive Rolle ein.

Die Aufgabe der vorliegenden Erfindung besteht darin, ein Netzkonzept zu schaffen, das eine flexible Bandbreitenverwaltung in der sehr heterogenen Netzlandschaft ermöglicht, und das auf anwendungsabhängige Gateways verzichten kann.

Diese Aufgabe wird durch ein Kommunikationsnetz nach Anspruch 1, durch ein Verfahren zum Übertragen eines Signals nach Anspruch 12, durch eine Netzverbindungseinheit nach Anspruch 13 sowie durch ein Verfahren zum Anpassen der Datenrate eines skalierten Datenstroms gemäß Anspruch 14 gelöst.

Der vorliegenden Erfindung liegt die Erkenntnis zugrunde, daß die geschilderten Probleme mittels eines multiskalierbaren Kommunikationssystems gelöst werden können. Das multiskalierbare Kommunikationssystem gemäß der vorliegenden Erfindung zeichnet sich vor allem durch einen skalierbaren Codierer im Sender aus, der eine Schicht-Darstellung (Layer-Darstellung) von Videodaten oder Audiodaten liefern kann, sowie durch eine erfindungsgemäße Netzverbindungseinheit, die zwei Netze mit verschiedenen Datenraten verbindet, und die den empfangenen Datenstrom, der mehrere Datenschichten umfassen wird, derart modifiziert, daß er in das zweite Netz mit beispielsweise niedrigerer Datenrate eingespeist werden kann. Diese Modifikation besteht jedoch nicht in einer vollständigen Decodierung und darauffolgenden Codierung, sondern lediglich im Verwerfen von so vielen Datenschichten, bis eine Übertragung des modifizierten Datenstroms, der weniger Datenschichten als der eingehende Datenstrom hat, über das zweite Netz möglich ist.

Durch das Konzept des multiskalierbaren Kommunikationssystems sind die Grundlagen bzw. Voraussetzungen dafür geschaffen, daß vorhandene Netze flexibel, effektiv und kostengünstig zu einem "Globalen Gesamtnetz" verbunden werden können, ohne daß wesentliche Bestandteile der bestehenden Netzinfrastrukturen geändert werden müssen. Somit ist eine Integration von z. B. analogen Netzen (PSTN) bis hin zu mobilen, digitalen Funknetzen (GSM, UMTS) möglich. Der Anwendungsbereich soll von der Individualkommunikation bis hin zur Verteil- oder Broadcast-Kommunikation reichen. Die Erzeugung, Übertragung und Modifikation von skalierten Datenströmen erlaubt nun eine dynamische Bandbreitenanpassung an Netzübergängen, indem Schichten, die die zur Verfügung stehende Bandbreite überschreiten, verworfen werden. Zudem kann die Bandbreitenverteilung innerhalb eines Netzes aufgrund der Datenschicht-Darstellung der übertragenen Datenströme dynamisch geregelt werden.

Weiterhin sind die Netzverbindungseinheiten wesentlich einfacher zu realisieren, wesentlich weniger rechenaufwendig und deshalb auch kostengünstiger und flexibel, da die Daten zur Umsetzung zwischen den Netzen nicht mehr auf Anwendungsebene gebracht werden müssen, da lediglich zumindest eine Datenschicht verworfen werden muß.

Schließlich sind die Decodierer oder Empfänger im erfindungsgemäßen multiskalierbaren Kommunikationssystem nahezu unabhängig von der Leistung der Endgeräte, in denen sie implementiert sind, da durch die Schichtendarstellung der Daten nach dem Abarbeiten der Basisschicht alle höheren Schichten verworfen werden können. Dies bedeutet, daß auch bei Änderungen auf der Quellenseite, beispielsweise wenn neuere bessere Codierer eingesetzt werden, bereits bei Teilnehmern befindliche Decodierer auch diesen neu erzeugten Datenstrom weiterhin decodieren können, indem sie lediglich die Basisschicht oder die erste Erweiterungsschicht codieren, und die neueren höheren Schichten verwerfen. Entschließt sich dann ein Teilnehmer, einen neuen Decodierer zu kaufen, so steht ihm die volle Qualität zur Verfügung. Somit ist in einem skalierbaren Kommunikationsnetz immer die Kompatibilität von beliebigen bereits bestehenden Decodierern zu neuen Codierern auf Quellenseite sichergestellt.

Bevorzugte Ausführungsbeispiele der vorliegenden Erfindung werden nachfolgend bezugnehmend auf die beiliegenden Zeichnungen detaillierter erläutert. Es zeigen:
- Fig. 1: eine schematische Darstellung eines einfachen erfindungsgemäßen Kommunikationsnetzes;
- Fig. 2a und 2b: eine Veranschaulichung von möglichen Skalierungsschichten und die Verarbeitung der Schichten in einer erfindungsgemäßen Netzverbindungseinheit;
- Fig. 3: eine detailliertere Darstellung an einem Ende des Netzes, d. h. das Zusammenarbeiten eines Endgeräts mit einem Netz;
- Fig. 4: eine schematische Darstellung einer Kaskade von verschiedenen Netzen und Netzverbindungseinheiten;
- Fig. 5: eine detailliertere Darstellung einer erfindungsgemäßen Netzverbindungseinheit, die ausgangsseitig mit mehreren Netzen verbunden ist; und
- Fig. 6: eine Übersicht über derzeit bestehende Netze, die auf multiskalierbare Art und Weise flexibel miteinander verbunden werden können.

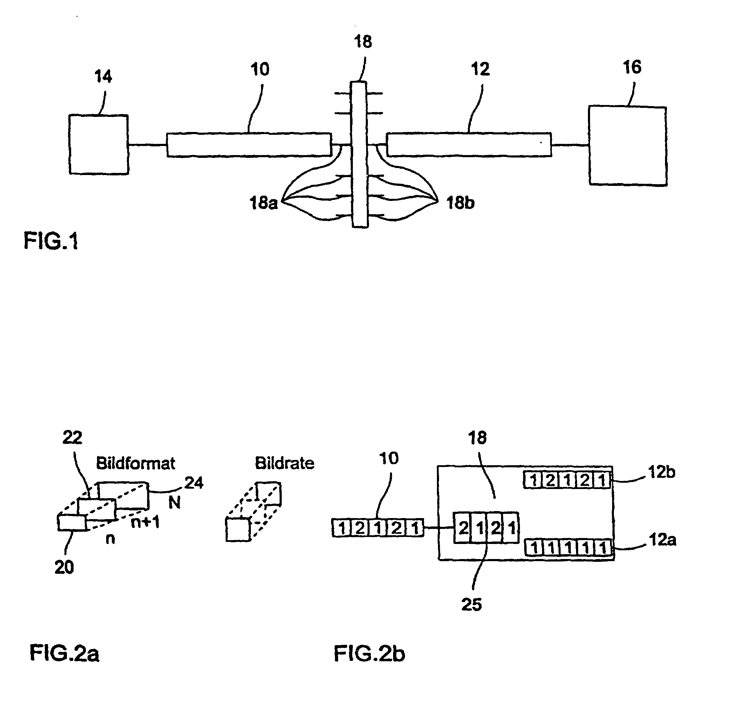

Im nachfolgenden wird bezugnehmend auf Fig. 1 der grundlegende Aufbau eines erfindungsgemäßen Kommunikationsnetzes erläutert. Das Kommunikationsnetz gemäß der vorliegenden Erfindung umfaßt ein erstes Netz 10, das eine Datenübertragung mit einer ersten Datenrate erlaubt. Das Kommunikationsnetz umfaßt ferner ein zweites Netz 12, das eine Datenübertragung mit einer zweiten Datenrate erlaubt. Mit einem Eingang des ersten Netzes 10 ist ein erstes Endgerät verbunden, während mit dem Ausgang des zweiten Netzes 12 ein zweites Endgerät 16 verbunden ist. Das erste Endgerät 14 umfaßt einen Codierer, der aus einem zu codierenden Signal einen skalierten Datenstrom mit zumindest zwei Datenschichten erzeugen kann, wobei sich die Datenschichten in ihrem Informationsgehalt bezüglich des zu codierenden Signals unterscheiden, und wobei der skalierte Datenstrom eine Datenrate aufweist, die kleiner oder gleich der ersten Datenrate ist. Dies bedeutet, daß das Ausgangssignal des ersten Endgeräts 14 in das erste Netz 10 eingespeist werden kann. Zwischen das erste Netz 10 und das zweite Netz 12 ist ferner eine erfindungsgemäße Netzverbindungseinheit 18 geschaltet. Die Netzverbindungseinheit 18 vollführt folgende Funktionen. Zum einen ist sie in der Lage, den skalierten Datenstrom von dem ersten Netz 10 zu empfangen. Weiterhin modifiziert sie den empfangenen Datenstrom durch Entfernen von zumindest einer Datenschicht aus dem skalierten Datenstrom derart, daß der modifizierte skalierte Datenstrom eine modifizierte Datenrate erhält, die kleiner oder gleich der zweiten Datenrate ist, wobei außerdem darauf zu achten ist, daß die Datenrate der Basisschicht kleiner als die Datenrate des zweiten Netzes ist, um überhaupt eine Kommunikation zu ermöglichen. Wird die letztere Bedingung nicht erfüllt, so kann die Netzverbindungseinheit eine Fehlermeldung an den Codierer im Sender schicken, um ihm mitzuteilen, daß das zweite Netz einen Datenstrom benötigt, der eine Basisschicht mit einer kleineren Datenrate aufweist. Ansprechend auf diese Fehlermeldung könnte der Sender bei diesem Szenario den Codierer entsprechend umstellen, um die Basisschichtdatenratenanforderung zu erfüllen.

Ist die Datenrate des zweiten Netzes ausreichend groß, um alle Datenschichten zu übertragen, wird die Netzverbindungseinheit selbstverständlich keine Datenschicht vom Datensignal entfernen. Schließlich ist die Netzverbindungseinheit 18 in der Lage, den modifizierten skalierten Datenstrom in das zweite Netz 12 einzuspeisen.

An dieser Stelle sei angemerkt, daß sich in dieser Anmeldung die Datenrate immer auf die einzelne Verbindung bezieht. Dieselbe kann somit auch geringer sein als die Datenrate, die vom Netz zur Verfügung gestellt wird, wenn sich beispielsweise mehrere Benutzer die Gesamtdatenrate eines Netzes teilen.

Wie es bereits erwähnt wurde, stellt Fig. 1 eine grundlegende Darstellung eines erfindungsgemäßen Kommunikationsnetzes dar. Wie aus Fig. 1 zu sehen ist, umfaßt die Netzverbindungseinheit typischerweise zusätzliche Eingänge 18a sowie zusätzliche Ausgänge 18b. Dies heißt also, daß bei realen Anwendungen eine Netzverbindungseinheit 18 typischerweise eingangsseitig mit mehreren Netzen und ausgangsseitig ebenfalls mit mehreren Netzen verbunden sein kann. Ist dies der Fall, so besteht die Aufgabe, Daten von einem eingangsseitig angeschlossenen Netz zu einem anderen ausgangsseitig angeschlossenen Netz zu übertragen, bzw. auf mehrere ausgangsseitig angeschlossene Netze zu übertragen, wenn eine Verteilung ("Broadcasting") erforderlich ist. Alternativ kann die Situation bestehen, Daten aus mehreren Eingangsnetzen in nur ein Ausgangsnetz zu multiplexen. Eine solche Netzverbindungseinheit wird in der Technik auch als Router bezeichnet.

In der bisherigen Darstellung wurde davon gesprochen, daß das erste Endgerät 14 lediglich einen Codierer besitzt, während das zweite Endgerät 16 lediglich einen Decodierer hat. In dieser Konfiguration wäre das erfindungsgemäße Kommunikationsnetz, das in Fig. 1 gezeigt ist, lediglich zu einer unidirektionalen Datenübertragung in der Lage, nämlich von dem ersten Endgerät 14 als Sender zu dem zweiten Endgerät 16 als Empfänger. Es ist jedoch offensichtlich, daß sowohl das erste Endgerät 14 als auch das zweite Endgerät 16 mit Codierer und Decodierer ausgestattet sein können, wodurch das erfindungsgemäße Kommunikationsnetz bidirektionale Datenübertragungen ermöglicht. In diesem Falle wären dann die Anschlüsse 18b die Eingänge der Netzverbindungseinheit 18, während die Anschlüsse 18a die Ausgänge der Netzverbindungseinheit 18 sein würden. Es sei jedoch darauf hingewiesen, daß im nachfolgenden aus Übersichtlichkeitsgründen ein unidirektionales Netz betrachtet wird, bei dem das erste Endgerät 14 der Sender ist, während das zweite Endgerät 16 der Empfänger ist. Für Fachleute ist es jedoch offensichtlich, die erfindungsgemäßen Lehren analog anzuwenden, um basierend darauf ein erfindungsgemäßes bidirektionales Netz aufzubauen.

Im nachfolgenden wird auf Fig. 2a eingegangen, um anhand eines Videosignals die Skalierbarkeit darzustellen. Allgemein gesagt ist eine Skalierbarkeit bezüglich der Bildqualität, der Bildrate oder des Bildformats möglich, um als Ergebnis der Skalierung eine varible Datenrate zu erhalten. Skalierbare Codierer können beispielsweise Codierer sein, die nach dem Standard MPEG-4 arbeiten. Für eine Funktionsbeschreibung sei auf den Standard MPEG-4 verwiesen. Links in Fig. 2a ist beispielsweise eine Skalierbarkeit bezüglich des Bildformats dargestellt. Eine erste Basisschicht 20 enthält beispielsweise lediglich die Informationen aus einem mittleren Abschnitt eines aufgezeichneten Videosignals. Das heißt, daß nicht das gesamte zur Verfügung stehende Videobildformat in einen einzigen Datenstrom codiert wird, sondern daß die Basisschicht 20 lediglich einen Ausschnitt mit entsprechend gewählter Größe aus der Mitte des Videobilds haben wird. Die erste Erweiterungsschicht 22 wird dann einen etwas größeren Ausschnitt umfassen, während eine zweite Erweiterungsschicht 24 das gesamte Videoformat codiert haben wird. Die drei Schichten 20, 22, 24 unterscheiden sich somit in ihrem Informationsgehalt bezüglich des ursprünglichen Videosignals, derart, daß die Basisschicht 20 lediglich einen geringen Informationsgehalt umfaßt, während die erste Erweiterungsschicht 22 einen etwas höheren Informationsgehalt hat, und die zweite Erweiterungsschicht einen noch höheren, in diesem Falle maximalen Informationsgehalt hat. Da die Basisschicht jedoch einen geringen Informationsgehalt hat, kann sie auch mit wesentlich geringerer Datenrate übertragen werden, als die zweite Erweiterungsschicht 24. Für bestimmte Anwendungen kann es ausreichend sein, daß im Interesse einer schnellen Übertragung über ein schmalbandiges Netz ein Betrachter lediglich den mittleren Ausschnitt eines Videobilds betrachtet, jedoch nicht so sehr am äußeren Rahmen interessiert ist, um beispielsweise einen Überblick über eine Videosequenz zu erhalten. Rechts in Fig. 2a ist eine weitere Skalierungsmöglichkeit dargestellt. Hier könnte eine Basisschicht lediglich jedes zweite Bild oder Frame einer Videosequenz umfassen, während die erste Erweiterungsschicht alle Frames codieren könnte. Es ist jedoch auch denkbar, in die Basisschicht z. B. lediglich jeden fünften Frame oder auch jeden zehnten Frame zu codieren, und beliebig viele Erweiterungsschichten herzustellen, die dann in aufsteigender Reihenfolge die dazwischenliegenden Frames umfassen würden. Somit kann auch über ein schmalbandiges Datennetz zumindest ein Eindruck der Videosequenz beispielsweise mittels jedes zehnten Frames übertragen werden.

Eine weitere Möglichkeit zur Skalierung besteht darin, aus einem vollständigen Videobild in der Basisschicht beispielsweise jedes fünfte Pixel in einer Zeile und jedes fünfte Pixel in einer Spalte zu codieren. Die Basisschicht würde dann das volle Videoformat sowie jedes Videoeinzelbild umfassen, jedoch lediglich mit einer begrenzten Bildqualität. Die Erweiterungsschichten könnten dann dazwischenliegende Pixel enthalten, wodurch eine beliebige Einstellung für jede Erweiterungsschicht gefunden werden kann.

Bei Audiosignalen könnte in die Basisschicht beispielsweise lediglich der Frequenzbereich von 0 - 4 kHz eines Audiosignals codiert werden. Ein Empfänger der Basisschicht hätte dann ein Signal vorliegen, das in etwa Telephonqualität besitzt. Eine zweite Erweiterungsschicht könnte nun die Audiobandbreite bis zu einer maximalen Frequenz von beispielsweise 12 kHz codieren, was einen Empfänger in die Lage versetzen würde, ein Audiosignal in HiFi-Qualität zu hören. Eine dritte Erweiterungsschicht könnte schließlich das Audiosignal mit einer Bandbreite von z. B. 16 kHz codiert enthalten, was bei einem Empfänger zu einem Audiosignal in CD-Qualität führen würde.

Im nachfolgenden sei auf das Verhältnis der Erweiterungsschichten bzw. der Basisschicht untereinander eingegangen. Wie es bereits erwähnt wurde, enthält die Basisschicht immer allein zu decodierende Daten. Ein Empfänger kann die Basisschicht decodieren und erhält beispielsweise ein Videosignal oder ein Audiosignal, jedoch mit Qualitäts- bzw. Informationsgehaltsabstrichen. Die erste Erweiterungsschicht kann nun einerseits derart implementiert sein, daß sie ebenfalls ein vollständiges Signal erhält, wodurch die erste Erweiterungsschicht unabhängig von der Basisschicht decodiert werden kann. Dies würde jedoch zur Wiederholung der gesamten Basisschichtinformationen und somit zu einem unnötigen Anwachsen von Daten im Netz führen. Vorzugsweise enthält daher die Erweiterungsschicht lediglich die Informationen zusätzlich zur Basisschicht. Dies führt jedoch auch zu der Tatsache, daß die Erweiterungsschicht nicht allein decodiert werden kann, sondern lediglich zusammen mit der Basisschicht. Diese Situation ist in Fig. 2b dargestellt, wobei Fig. 2b einen skalierten Datenstrom von einem ersten Netz 10 zeigt, der in die Netzverbindungseinheit 18 eingespeist wird. Die Netzverbindungseinheit 18 umfaßt hierbei einen Zwischenspeicher 25, in dem ein empfangener Teil des eingehenden skalierten Datenstroms gespeichert ist. Die Netzverbindungseinheit 18 besitzt bei dem in Fig. 2 gezeigten Beispiel zwei Ausgänge. Insbesondere wird der eingehende Datenstrom auf zwei Ausgangsnetze 12a und 12b verteilt. Das zweite Netz 12a erlaubt lediglich eine Übertragung mit relativ geringer Datenrate, weshalb lediglich die erste Schicht, die mit "1" gekennzeichnet ist, übertragen wird. Das zweite Netz 12b erlaubt jedoch eine Übertragung mit höherer Datenrate, weshalb beide Schichten in dasselbe eingespeist werden. Aufgrund der hier vorliegenden Implementation der Skalierbarkeit benötigt das zweite Netz jedoch sowohl die Basisschicht 1 als auch die erste Erweiterungsschicht 2, da die erste Erweiterungsschicht 2 nur zusammen mit der Basisschicht 1 decodiert werden kann. Es bestände jedoch auch die Möglichkeit, daß das zweite Netz 12b nicht direkt zu einem zweiten Endgerät 16 führt, sondern wieder zu einer anderen Netzverbindungseinheit, an der wieder ausgangsseitig mehrere Netze angeschlossen sind, über die das auf 12b vorhandene Signal verteilt werden soll. Dann wäre es immer bevorzugt, alle Schichten, also die Basisschicht und die erste Erweiterungsschicht zur Verfügung zu haben, um an möglichst vielen Stellen im Netz noch ein möglichst hochqualitatives Signal verteilen zu können.

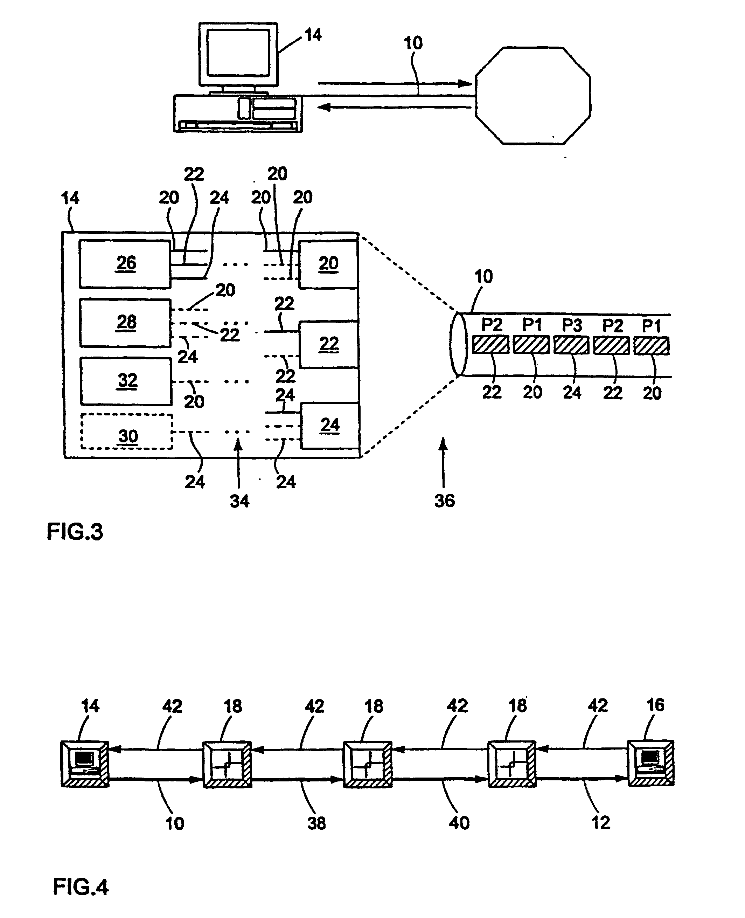

Fig. 3 zeigt schematisch die Situation an einem Endgerät 14 oder 16 und dem entsprechenden angeschlossenen Netz. Aus Übersichtlichkeitsgründen sei davon ausgegangen, daß es sich in Fig. 3 um das erste Endgerät 14 handelt, das an das erste Netz 10 angeschlossen ist. Der in dem ersten Endgerät 14 vorhandene Codierer kann sich aus mehreren Teilcodierern zusammensetzen, und zwar z. B. aus einem skalierbaren Videocodierer/Decodierer 26, aus einem skalierbaren Audiocodierer/Decodierer 28 und aus einem Datencodierer 30. Der Codierer im ersten Endgerät kann ferner eine Steuerungseinheit 32 umfassen, die angepaßte Endgeräte/Netz-Steuerungsparameter erzeugt. Der skalierbare Videocodierer 26 sowie der skalierbare Audiocodierer 28 umfassen jeweils drei Ausgänge, was schematisch darstellen soll, daß beide sowohl eine Basisschicht 20 als auch eine erste Erweiterungsschicht 22 sowie eine zweite Erweiterungsschicht 24 erzeugen können. Die einzelnen Codierer sind mittels eines Multiplexers 34 mit drei Codiererausgangsstufen verbunden, nämlich der Basisstufe 20, der Erweiterungsstufe 22 sowie der Erweiterungsstufe 24. Diese drei Stufen bilden eine Netzschnittstelle 36 mit dem ersten Netz 10. Aus Fig. 3 ist ersichtlich, daß die Basisstufe mittels des Multiplexers 34 sowohl die Basisschicht des skalierbaren Videocodierers/Decodierers als auch des skalierbaren Audiocodierers/Decodierers erhält. Am dritten Eingang wird derselben das Ausgangssignal der Endgeräte/Netz-Steuerung zugeführt, das somit ebenfalls in der Basisschicht vorhanden ist. Die erste Erweiterungsstufe erhält sowohl die erste Stufe 22 des Videocodierers/Decodierers als auch die erste Erweiterungsschicht des Audiocodierers/Decodierers. Die dritte Stufe, d. h. die zweite Erweiterungsstufe 24, erhält sowohl die zweite Erweiterungsschicht der beiden Codierer als auch zusätzlich codierte Daten aus dem Datencodierer 30.

Hier sei darauf hingewiesen, daß Audio- Viedeo- und Datenströme getrennt über "virtuelle" Kanäle übertragen werden können. In diesem Fall sind die Schichten der genannten Datenströme nicht zusammen in einem Paket sondern in getrennten Paketen enthalten.

Vorzugsweise findet die Datenübertragung im Netz durch Pakete P1, P2 und P3 statt. Pakete P1 sind dabei Basisschichtpakete, während Pakete P2 Daten für die erste Erweiterungsschicht 22 beinhalten und Pakete P3 Daten für die zweite Erweiterungsschicht 24 übertragen. Zusammengefaßt läßt sich somit sagen, daß das Endgerät 14 einen in Skalierungsschichten aufgeteilten Datenstrom liefert, wobei in der Basisschicht die zur Kommunikation unabdingbaren Informationen zusammengefaßt sind. Durch eine beliebige Anzahl von Erweiterungsschichten läßt sich die Qualität der Anwendungen (Video, Audio, usw.) skalieren.

Die jeweilige Skalierungsschicht wird bei einem bevorzugten Ausführungsbeispiel der vorliegenden Erfindung in einem dementsprechenden Datenpaket vorangehenden Bestimmungsdatenblock gekennzeichnet. Dabei kann die Datenrate der einzelnen Skalierungsschichten a priori bekannt sein.

Im nachfolgenden werden zwei Möglichkeiten beschrieben, auf die die Netzverbindungseinheit 18 einen ankommenden skalierten Audiodatenstrom modifizieren kann, damit die Datenrate des modifizierten skalierten Datenstroms an das zweite, d. h. das ausgangsseitig angeschlosse, Netz angepaßt ist. Eine Möglichkeit besteht darin, im zweiten Netz 12 eine Datenrate zu reservieren, wenn das Netz entsprechend ausgelegt ist. Die Netzverbindungseinheit 18 bestimmt dabei iterativ über eine Summation der Datenraten aus jeder Skalierungsschicht, ob die Summe kleiner oder gleich der für das zweite Netz reservierbaren Datenrate ist. In einem ersten Schritt wird versucht, den gesamten skalierten Datenstrom unmodifiziert weiterzuleiten, um die maximale Bandbreite zu übertragen. Wenn dies jedoch fehlschlägt, wird die höchste Erweiterungsschicht verworfen und überprüft, ob die nun vorhandene Datenrate bereits für eine Übertragung über das zweite Netz geeignet ist, d. h. kleiner oder gleich der Datenrate des zweiten Netzes ist. Ist dies immer noch nicht der Fall, so wird auch die zweithöchste Erweiterungsschicht verworfen, bis die Bedingung erfüllt ist, daß die Datenrate des modifizierten skalierten Datenstroms kleiner oder gleich der reservierbaren Datenrate ist.

Die Netzverbindungseinheit 18 kann derart eingestellt werden, daß sie auf Anforderung oder automatisch diese Datenratenreservierung durchführt. Dies ist dann vorteilhaft, wenn sich die Datenrate des Eingangsdatenstroms während des Bestehens der Verbindung verändert. Wenn für die Verbindung am Ausgang eine Funktion zum Ändern der Datenrate bei bestehender Verbindung zur Verfügung steht, kann die Ausgangsdatenrate an die veränderte Eingangsdatenrate angepaßt werden.

Eine weitere Möglichkeit des Verbindungsaufbaus besteht nicht in der Reservierung der Verbindung, sondern in der dynamischen Bestimmung der Datenrate. Hierzu muß die Netzverbindungseinheit 18 mit dem zweiten Netz 12 in Verbindung treten und überprüfen, welche Datenrate gerade verfügbar ist.

Die Datenrate am Eingang und an den Ausgängen des Routers kann über Timestamps und eine Referenzzeit des Routers bestimmt werden. Die in einem Intervall (aktuell gültiger Timestamp) vorliegenden Datenpakete müssen in dem selben Intervall verschickt werden. Ist dies nicht möglich, wird ab dem mächsten Intervall eine entsprechend geringere Anzahl von Skalierungsstufen gesendet. Die Datenrate an den Ausgängen wird fortlaufend überwacht, um gegebenenfalls wieder eine größere Anzahl von Skalierungsstufen zu senden. Ist die Datenübertragung isochron, können die Timestamps implizit aus dem Zeitpunkt des Eintreffens der Daten ermittelt werden.

Wenn also für die Verbindung am Ausgang der Netzverbindungseinheit 18 keine Datenrate reserviert werden kann, muß die Anzahl der zu sendenden Skalierungsschichten dynamisch bestimmt werden, wozu, wie bereits erwähnt wurde, die aktuell verfügbare Datenrate bestimmt wird.

Fig. 4 zeigt ein Kommunikationsnetz gemäß der vorliegenden Erfindung, das ein Endgerät 14 und ein weiteres Endgerät 16 sowie eine Mehrzahl von Netzverbindungseinheiten 18 aufweist. Die Netzverbindungseinheiten 18 sind über mehrere Netze mit beliebiger Datenrate untereinander verbunden. Der Datenfluß über die einzelnen Netze 10, 38, 40, 12 ist durch die dicken Pfeile symbolisiert. Es sei darauf hingewiesen, daß das erfindungsgemäße Netz zwischen dem ersten Netz 10 und dem zweiten Netz 12 eine beliebige Anzahl von Netzverbindungsstufen 18 und Netzen 38, 40 aufweisen kann, wie es aus Fig. 4 ersichtlich ist. Die dünnen Pfeile in Fig. 4 stellen dagegen einen zum Datenfluß entgegengesetzten Steuerfluß 42 dar. Dieser Steuerfluß dient zur optimalen Anpassung des Senders im ersten Endgerät 14 bzw. des in demselben vorgesehenen Codierers an die aktuellen Netzgegebenheiten bzw. an den aktuellen Empfänger 16. Der Empfänger kann über den Steuer- oder Rückkopplungsfluß 42 dem Empfänger mitteilen, für wieviele Stufen derselbe ausgelegt ist. Daraufhin kann der Sender seine Codierschichteneinteilung ändern, um optimal an den Empfänger angepaßt zu sein. Um dies zu erreichen, wird über ein Protokoll die höchste der von den aktuellen Teilnehmern verwendeten Anzahl von Skalierungsschichten der vorhergehenden Netzverbindungseinheit 18 mitgeteilt. Diese Netzverbindungseinheit 18 kann daraufhin die zu sendenden Skalierungsschichten auf die maximal erforderliche Anzahl von Skalierungsschichten reduzieren. Einerseits erlaubt die dynamische Änderung der Datenrate durch Anpassung der Anzahl der zu übertragenden Skalierungsschichten eine schnelle Adaption an aktuelle Netzgegebenheiten, andererseits wird auch durch die Rückkopplung von Netzparametern in Senderichtung erreicht, daß der Sender den Aufbau des skalierbaren Datenstroms auf grundlegende Veränderungen des Netzes einstellen kann. So kann beispielsweise bei Hinzunahme eines Mobilfunkteilnehmers die Basisschicht 20 weiter unterteilt werden, um auch im Mobilfunknetz selbst eine Skalierbarkeit zur Verfügung zu stellen. Weitere Möglichkeiten, die alternativ zur Modifikation des Aufbaus des skalierbaren Datenstoms durchgeführt werden können, bestehen darin, die Paketgröße des Datenstroms anzupassen, Fehlerschutzmöglichkeiten zu implementieren, unterschiedliche Codierungsarten einzusetzen und dergleichen.

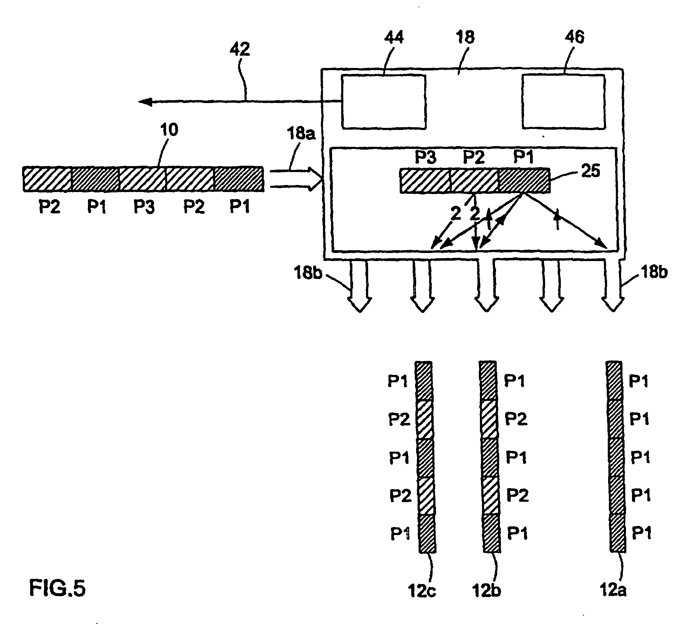

Fig. 5 zeigt eine detailliertere Darstellung der Netzverbindungseinheit 18. Über den Eingang 18a ist die Netzverbindungseinheit 18 mit dem ersten Netz 10 verbunden. Dieselbe weist jedoch nun mehrere Ausgänge 18b aus, welche mit zweiten Netzen 12a, 12b und 12c verbunden sind. Aus Fig. 5 ist ersichtlich, daß das zweite Netz 12a eine geringere Datenrate als die anderen Netze 12b und 12c hat, da in dem Netz 12a nur eine Übertragung der Basisschicht P1 möglich ist, während in den Netzen 12b und 12c eine Datenübertragung sowohl der Basisschicht als auch der ersten Erweiterungsschicht P2 möglich ist. Es ist ferner deutlich, daß die zweite Erweiterungsschicht (P3) in keinem ausgangsseitigen Netz übertragen wird, da bei dem gezeigten Beispiel kein mit der Netzverbindungseinheit 18 über einen Ausgang 18b verbundenes zweites Netz 12 eine Datenübertragung mit einer derart hohen Datenrate ermöglicht, daß alle Schichten des skalierten Datenstroms übertragen werden können. Die Netzverbindungseinheit 18 umfaßt ferner eine Einrichtung 44 zum Bestimmen der Anzahl der verwendeten Skalierungsschichten für die ausgangsseitig angeschlossenen Netze sowie eine Einrichtung 46, die bestimmt, von welchem Eingang bzw. welchen Eingängen welcher Ausgang bzw. welche Ausgänge bedient werden sollen. Die Einrichtung 46 ist daher die Routing-Einrichtung, die für die Wegleitung der Datenpakete mittels spezieller Routingprotokolle verantwortlich ist.

Die Funktionsweise der Netzverbindungseinheit 18 im Routing-Betrieb stellt sich folgendermaßen dar. Die ersten n Skalierungsschichten des Eingangsdatenstroms werden in einen Puffer 25 übernommen. Anschließend wird der Datenbestimmungsblock jedes Pakets überprüft, um zu bestimmen, zu welcher Stufe ein spezielles Paket gehört. Daraufhin kann mit dem Kopieren der Datenpakete in die entsprechenden ausgangsseitigen Netze begonnen werden, wobei bei dem gezeigten Beispiel Pakete der Basisschicht P1 in alle drei ausgangsseitig angeschlossenen Netze kopiert wird, während die Paket P2 der ersten Erweiterungsschicht nur in die zwei Netze 12b und 12c kopiert wird, und während die Pakete P3der zweiten Erweiterungsschicht verworfen werden.

## Patentansprüche

1. Kommunikationsnetz mit folgenden Merkmalen:
einem ersten Netz (10), das eine Datenübertragung mit einer ersten Datenrate erlaubt;
einem zweiten Netz (12), das eine Datenübertragung mit einer zweiten Datenrate erlaubt;
einem ersten Endgerät (14), das mit dem ersten Netz (10) verbunden ist, und das einen Codierer (26, 28) aufweist, der aus einem zu codierenden Signal einen skalierten Datenstrom mit zumindest zwei Datenschichten (20, 22, 24) erzeugen kann, wobei sich die Datenschichten (20, 22, 24) in ihrem Informationsgehalt bezüglich des zu codierenden Signals unterscheiden, und wobei der skalierte Datenstrom eine Datenrate aufweist, die kleiner oder gleich der ersten Datenrate ist;
einem zweiten Endgerät (16), das mit dem zweiten Netz (12) verbunden ist, und das einen Decodierer aufweist, durch den ein über das zweite Netz übertragbarer Datenstrom decodierbar ist; und
einer Netzverbindungseinheit (18), die zwischen das erste (10) und das zweite (12) Netz geschaltet ist, und die betreibbar ist,
um den skalierten Datenstrom von dem ersten Netz (10) zu empfangen (18a),
um den empfangenen Datenstrom durch Entfernen von zumindest einer Datenschicht (22, 24) derart zu modifizieren, daß der modifizierte skalierte Datenstrom eine modifizierte Datenrate erhält, die kleiner oder gleich der zweiten Datenrate ist, und
um den modifizierten skalierten Datenstrom in das zweite Netz einzuspeisen (18b), und
wobei die Netzverbindungseinheit (18) ferner folgende Merkmale aufweist:
eine Einrichtung (44) zum Erfassen von Informationen über Netzgegebenheiten in dem zweiten. Netz (12); und
eine Einrichtung (44) zum Übermitteln dieser Informationen über einen Rückkopplungskanal von der Netzverbindungseinheit (18) zu dem ersten Endgerät (14), damit dasselbe als Reaktion darauf die Anzahl der von dem Codierer (26, 28) erzeugten Datenschichten steuert und/oder eine Unterteilung einer Datenschicht (20) in eine Mehrzahl von Unterskalierungsschichten durchführt.

2. Kommunikationsnetz nach Anspruch 1, bei dem sowohl das erste als auch das zweite Endgerät (14, 16) sowohl einen Codierer als auch einen Decodierer aufweisen, wodurch eine bidirektionale Datenübertragung möglich ist.

3. Kommunikationsnetz nach Anspruch 1 oder 2, bei dem der Codierer in dem Endgerät folgende Merkmale aufweist:
eine Mehrzahl von Teilcodierern (26, 28, 30, 32) für eine Mehrzahl von zu codierenden Quellensignalen, die für jede Datenschicht (20, 22, 24) eigene Pakete (P1, P2, P3) ausgeben;
eine Netzschnittstelle (36) mit einer Mehrzahl von Skalierungsschichten (20, 22, 24) zum seriellen Einspeisen von Datenpaketen aus verschiedenen Skalierungsschichten in das erste Netz (10); und
einen Multiplexer (34) zum Verteilen der Datenpakete von den Teilcodierern auf die Skalierungsschichten oder zum Multiplexen der von den Teilcodierern erzeugten Pakete auf getrennte virtuelle Kanäle.

4. Kommunikationsnetz nach Anspruch 3, bei dem die Skalierungsschichten jedem ausgegebenen Datenpaket (P1, P2, P3) einen Bestimmungsdatenblock hinzufügen, der kennzeichnet, zu welcher Datenschicht (20, 22, 24) das entsprechende Paket (P1, P2, P3) gehört.

5. Kommunikationsnetz nach einem der vorhergehenden Ansprüche, bei dem eine Verbindung der Netzverbindungseinheit (18) mit dem zweiten Netz (12) mit Reservierung eingestellt werden kann, und bei dem die Netzverbindungseinheit (18) ferner folgende Merkmale aufweist:
eine Einrichtung zum Ermitteln der modifizierten Datenrate, wobei die Summe der Datenraten der niedrigsten Datenschichten kleiner oder gleich der zweiten Datenrate sein muß; und
eine Einrichtung zum Reservieren der modifizierten Datenrate im zweiten Netz.

6. Kommunikationsnetz nach einem der Ansprüche 1 bis 4, bei dem eine Verbindung zwischen der Netzverbindungseinheit (18) und dem zweiten Netz (12) ohne Reservierung eingestellt werden kann, und bei dem die Netzverbindungseinheit ferner folgende Merkmale aufweist:
eine Einrichtung zum Ermitteln der verfügbaren Datenrate im zweiten Netz; und
eine Einrichtung zum Ermitteln der modifizierten Datenrate, wobei die Summe der Datenraten der niedrigsten Datenschichten kleiner oder gleich der zweiten Datenrate sein muß.

7. Kommunikationsnetz nach einem der vorhergehenden Ansprüche, bei dem die Netzverbindungseinheit (18) ausgangsseitig mit einer Mehrzahl von Netzen (12a, 12b, 12c) verbunden ist, wobei die Netzverbindungseinheit (18) ferner folgende Merkmale aufweist:
eine Einrichtung (44) zum Bestimmen der Anzahl von Datenschichten, die in jedes ausgangsseitig angeordnete Netz (12a, 12b, 12c) eingespeist werden können;
einen Puffer (25) zum Zwischenspeichern zumindest eines Datenpakets (P1, P2, P3) für jede Datenschicht (20, 22, 24);
eine Einrichtung zum Demultiplexen der gepufferten Datenpakete (P1, P2, P3) in die Datenschichten des skalierten Datenstroms; und
eine Einrichtung (46) zum Kopieren der Datenpakete zu den entsprechenden ausgangsseitig verbundenen Netzen (12a, 12b, 12c) unter Berücksichtigung der bestimmten Anzahl von Datenschichten für jedes Netz.

8. Kommunikationsnetz nach einem der vorhergehenden Ansprüche, bei dem die Netzverbindungseinheit (18) angeordnet ist, um als Informationen über Netzgegebenheiten über den Rückkopplungskanal (42) Netzparameter bezüglich der minimalen Datenrate eines Netzabschnitts und Informationen über die höchste Anzahl von Datenschichten, die ein in einem Endgerät vorhandener Decodierer decodiert, zum Codierer zu übermitteln, damit derselbe die Anzahl der Datenschichten des skalierten Datenstroms dynamisch steuern kann.

9. Kommunikationsnetz nach einem der vorhergehenden Ansprüche, bei dem die Netzverbindungseinheit angeordnet ist, um über den Rückkopplungskanal (42) solche Informationen über Netzgegebenheiten des zweiten Netzes (12) zu dem Codierer (26, 28) des ersten Endgeräts (14) zu übermitteln, damit derselbe ansprechend darauf eine Paketgröße des skalierten Datenstroms anpaßt, Fehlerschutzmöglichkeiten implementiert und/oder unterschiedliche Codierungsarten einsetzt.

10. Kommunikationsnetz nach einem der vorhergehenden Ansprüche, bei dem das zu codierende Signal ein Videosignal aufweist, wobei sich die Datenschichten in der Anzahl von ausgelassenen Bildern einer Videosequenz; und/oder im Bildformat der einzelnen Videobilder; und/oder in der Bildqualität, z. B. der Anzahl von Pixeln pro Bild, Verzerrungen im Bild, unterschiedliche Bildformate, unterscheiden.

11. Kommunikationsnetz nach einem der vorhergehenden Ansprüche, bei dem das zu codierende Signal ein Audiosignal aufweist, wobei sich die Datenschichten in der Audiobandbreite des in einer Datenschicht (P1, P2, P3) codierten Signals unterscheiden.

12. Verfahren zum Übertragen eines Signals über zwei seriell angeordnete Netze (10, 12), die unterschiedliche Datenraten erlauben, mit folgenden Schritten:
Codieren und Senden eines zu übertragenden Signals, um einen skalierten Datenstrom (P1, P2, P3) zu erhalten, der zumindest zwei Datenschichten (20, 22, 24) umfaßt. wobei sich die Datenschichten in ihrem Informationsgehalt bezüglich des zu codierenden Signals unterscheiden;
Übertragen des skalierten Datenstroms in dem ersten Netz (10) mit einer ersten Datenrate;
Empfangen (18a) des skalierten Datenstroms;
Modifizieren des empfangenen skalierten Datenstroms durch Entfernen zumindest einer Datenschicht (22, 24) in einer Netzverbindungseinheit (18), die zwischen das erste (10) und das zweite (12) Netz geschaltet ist, derart, daß der modifizierte skalierte Datenstrom eine modifizierte Datenrate erhält, die kleiner oder gleich einer zweiten Datenrate ist, wobei die zweite Datenrate kleiner als die erste Datenrate ist;
Ausgeben (18b) des modifizierten skalierten Datenstroms mit der zweiten Datenrate;
übertragen des modifizierten skalierten Datenstroms in dem zweiten Netz (12) mit der zweiten Datenrate;
Empfangen und Decodieren des modifizierten skalierten Datenstroms, um ein decodiertes Signal zu erhalten, dessen Informationsgehalt kleiner als der des zu übertragenden Signals ist;
Erfassen (44) von Informationen über Netzgegebenheiten in dem zweiten Netz (12),
wobei der Schritt des Codierens und Sendens als Reaktion auf diese Informationen ausgeführt wird, um die Anzahl der bei der Codierung erzeugten Datenschichten zu steuern und/oder eine Unterteilung einer Datenschicht (20) in eine Mehrzahl von unterskalierungsschichten durchzuführen.

13. Netzverbindungseinheit (18) mit folgenden Merkmalen:
einer Einrichtung (18a) zum Empfangen eines skalierten Datenstroms aus einem ersten Netz (10), der von einem Endgerät (14) durch Codierung erzeugt worden ist und zumindest zwei Datenschichten (20, 22, 24) aufweist, die sich in ihrem Informationsgehalt bezüglich eines dem skalierten Datenstrom zugrunde liegenden Signals unterscheiden;
einer Einrichtung zum Modifizieren des skalierten Datenstroms durch Entfernen von wenigstens einer Datenschicht (22, 24) aus dem skalierten Datenstrom, um einen modifizierten skalierten Datenstrom zu erhalten, der eine modifizierte Datenrate aufweist, die kleiner oder gleich einer vorgegebenen Datenrate ist; und
einer Einrichtung (18b) zum Ausgeben des modifizierten skalierten Datenstroms mit der modifizierten Datenrate in ein zweites Netz (12);
einer Einrichtung (44) zum Erfassen von Informationen über Netzgegebenheiten in dem zweiten Netz (12); und
einer Einrichtung (44) zum Übermitteln dieser Informationen über einen Rückkopplungskanal (42) von der Netzverbindungseinheit (18) zu dem ersten Endgerät (14), damit dasselbe als Reaktion darauf die Anzahl der bei der Codierung erzeugten Datenschichten steuert und/oder eine Unterteilung einer Datenschicht (20) in eine Mehrzahl von Unterskalierungsschichten durchführt.

14. Verfahren zum Anpassen der Datenrate eines skalierten Datenstroms an eine vorgegebene Datenrate:
Empfangen eines skalierten Datenstroms aus einem ersten Netz (10), der von einem Endgerät (14) durch Codierung erzeugt worden ist und der zumindest zwei Datenschichten (20, 22, 24) aufweist, die sich in ihrem Informationsgehalt bezüglich eines dem skalierten Datenstrom zugrunde liegenden Signals unterscheiden;
Modifizieren des skalierten Datenstroms durch Entfernen von wenigstens einer Datenschicht (22, 24) aus dem skalierten Datenstrom, um einen modifizierten skalierten Datenstrom zu erhalten, der eine modifizierte Datenrate aufweist, die kleiner oder gleich einer vorgegebenen Datenrate ist;
Ausgeben des modifizierten skalierten Datenstroms mit der modifizierten Datenrate in ein zweites Netz (12);
Erfassen (44) von Informationen über Netzgegebenheiten in dem zweiten Netz (12); und
Übermitteln dieser Informationen über einen Rückkopplungskanal (42) von der Netzverbindurigseinheit (18) zu dem ersten Endgerät (14), damit dasselbe als Reaktion darauf die Anzahl der bei der Codierung erzeugten Datenschichten steuert und/oder eine Unterteilung einer Datenschicht (20) in eine Mehrzahl von Unterskalierungsschichten durchführt.

## Claims

1. A communication network comprising the following features:
a first network (10), which permits data transmission at a first bit rate;
a second network (12), which permits data transmission at a second bit rate;
a first terminal (14), which is connected to the first network (10) and which has an encoder (26, 28) which can generate a scaled data flow with at least two data layers (20, 22, 24) from a signal to be coded, the data layers (20, 22, 24) differing in their information content as regards the signal to be coded and the scaled data flow having a bit rate which is smaller than or equal to the first bit rate;
a second terminal (16), which is connected to the second network (12) and which has a decoder by means of which a data flow which is transmittable over the second network is decodable; and
a network connecting unit (18), which is connected between the first (10) and the second (12) network and which is operable
so as to receive (18a) the scaled data flow from the first network (10),
so as to modify the received data flow, by removing at least one data layer (22, 24), in such a way that the modified bit rate of the modified scaled data flow is smaller than or equal to the second bit rate, and
so as to feed (18b) the modified scaled data flow into the second network, and
where the network connecting unit (18) also comprises the following features:
a device (44) for gathering information on network conditions in the second network (12); and
a device (44) for communicating this information over a feedback channel from the network connecting unit (18) to the first terminal (14) so that it can respond by controlling the number of data layers generated by the encoder (26, 28) and/or by performing a subdivision of a data layer (20) into a plurality of subscaling layers.

2. A communication network according to claim 1, wherein both the first and the second terminal (14, 16) have both an encoder and a decoder, thereby enabling bidirectional data transmission.

3. A communication network according to claim 1 or 2, wherein the encoder in the terminal comprises the following features:
a plurality of subcoders (26, 28, 30, 32) for a plurality of source signals to be coded which provide separate packets (P1, P2, P3) for each data layer (20, 22, 24);
a network interface (36) with a plurality of scaling layers (20, 22, 24) for the serial feeding of data packets from different scaling layers into the first network (10); and
a multiplexer (34) for distributing the data packets from the subcoders among the scaling layers or for multiplexing the packets generated by the subcoders onto separate virtual channels.

4. A communication network according to claim 3, wherein the scaling layers add to each issued data packet (P1, P2, P3) a determination data block which indicates the data layer (20, 22, 24) to which the corresponding packet (P1, P2, P3) belongs.

5. A communication network according to one of the preceding claims, wherein a connection of the network connecting unit (18) with the second network (12) can be set up with reservation and wherein the network connecting unit (18) also comprises the following features:
a device for ascertaining the modified bit rate, where the sum of the bit rates of the lowest data layers must be smaller than or equal to the second bit rate; and
a device for reserving the modified bit rate in the second network.

6. A communication network according to one of the claims 1 to 4, wherein a connection between the network connecting unit (18) and the second network (12) can be set up without reservation and wherein the network connecting unit also comprises the following features:
a device for ascertaining the available bit rate in the second network; and
a device for ascertaining the modified bit rate, where the sum of the bit rates of the lowest data layers must be smaller than or equal to the second bit rate.

7. A communication network according to one of the preceding claims, wherein the network connecting unit (18) is connected on the output side to a plurality of networks (12a, 12b, 12c) and where the network connecting unit (18) also comprises the following features:
a device (44) for determining the number of data layers which can be fed into each of the networks (12a, 12b, 12c) located on the output side;
a buffer (25) for buffering at least one data packet (P1, P2, P3) for each data layer (20, 22, 24);
a device for demultiplexing the buffered data packets (P1, P2, P3) into the data layers of the scaled data flow; and
a device (46) for copying the data packets to the corresponding networks (12a, 12b, 12c) connected on the output side, taking account of the number of data layers determined for each network.

8. A communication network according to one of the preceding claims, wherein the network connecting unit (18) is designed to communicate network condition information to the encoder over the feedback channel (42) in the form of network parameters relating to the minimal bit rate of a network section and information on the highest number of data layers which a decoder in a terminal decodes, so that the encoder can control dynamically the number of data layers of the scaled data flow.

9. A communication network according to one of the preceding claims, wherein the network connecting unit is designed to communicate such information on the network conditions of the second network (12) to the encoder (26, 28) of the first terminal (14) over the feedback channel (42), so that the the encoder can respond by adjusting a packet size of the scaled data flow, implementing error protection possibilities and/or employing different types of coding.

10. A communication network according to one of the. preceding claims, wherein the signal to be coded comprises a video signal and where the data layers differ in the number of images of a video sequence which are ignored and/or in the image format of the individual video images and/or in the image quality, e.g. the number of pixels per image, distortions in the image, different image formats.

11. A communication network according to one of the preceding claims, wherein the signal to be coded comprises an audio signal and where the data layers differ in the audio bandwidth of the signal coded in a data layer (P1, P2, P3).

12. A method for transmitting a signal over two serially arranged networks (10, 12), which permit different bit rates, comprising the following steps:
coding and sending a signal for transmission so as to obtain a scaled data flow (P1, P2, P3), the data layers differing in their information content as regards the signal to be coded;
transmitting the scaled data flow in the first network (10) at a first bit rate;
receiving (18a) the scaled data flow;
modifying the received scaled data flow by removing at least one data layer (22, 24) in a network connecting unit (18), which is connected between the first (10) and the second (12) network, in such a way that the modified scaled data flow has a modified bit rate which is smaller than or equal to a second bit rate, the second bit rate being smaller than the first bit rate;
issuing (18b) the modified scaled data flow at the second bit rate;
transmitting the modified scaled data flow in the second network (12) at the second bit rate;
receiving and decoding the modified scaled data flow to obtain a decoded signal whose information content is less than that of the signal to be transmitted; and
gathering (44) information on network conditions in the second network (12),
where the step of coding and sending is performed in response to this information so as to control the number of data layers generated when coding and/or to perform a subdivision of a data layer (20) into a plurality of subscaling layers.

13. A network connecting unit (18) comprising the following features:
a device (18a) for receiving from a first network (10) a scaled data flow which has been generated by a terminal (14) by coding and which has at least two data layers (20, 22, 24) which differ in their information content as regards a signal which forms the basis of the scaled data flow;
a device for modifying the scaled data flow by removing at least one data layer (22, 24) from the scaled data flow so as to obtain a modified scaled data flow which has a modified bit rate which is smaller than or equal to a specified bit rate; and
a device (18b) for issuing the modified scaled data flow at the modified bit rate into a second network (12);
a device (44) for gathering information on network conditions in the second network (12); and
a device (44) for communicating this information over a feedback channel (42) from the network connecting unit (18) to the first terminal (14) so that it can respond by controlling the number of data layers generated when coding and/or by performing a subdivision of a data layer (20) into a plurality of subscaling layers.

14. A method for adjusting the bit rate of a scaled data flow to a specified bit rate:
receiving from a first network (10) a scaled data flow which has been generated by a terminal (14) by coding and which has at least two data layers (20, 22, 24) which differ in their information content as regards a signal which forms the basis of the scaled data flow;
modifying the scaled data flow by removing at least one data layer (22, 24) from the scaled data flow so as to obtain a modified scaled data flow which has a modified bit rate which is smaller than or equal to a specified bit rate;
issuing the modified scaled data flow at the modified bit rate into a second network (12);
gathering (44) information on network conditions in the second network (12); and
communicating this information over a feedback channel (42) from the network connecting unit (18) to the first terminal (14) so that it can respond by controlling the number of data layers generated when coding and/or by performing a subdivision of a data layer (20) into a plurality of subscaling layers.

## Revendications

1. Réseau de communication, aux caractéristiques suivantes :
un premier réseau (10) permettant une transmission à un premier débit de données ;
un second réseau (12) permettant une transmission à un second débit de données ;
un premier appareil terminal (14) relié au premier réseau (10) et présentant un codeur (26, 28) pouvant générer, à partir d'un signal à coder, un courant de données échelonné avec au moins deux couches de données (20, 22, 24), les couches de données (20, 22, 24) se différenciant par leur teneur en informations par rapport au signal à coder, et le courant de données échelonné présentant un débit de données qui est inférieur ou égal au premier débit de données ;
un second appareil terminal (16) relié au second réseau (12) et présentant un décodeur par lequel peut être décodé un courant de données pouvant être transmis par le second réseau ; et
une unité de connexion au réseau (18) connectée entre le premier (10) et le second (12) réseau et pouvant fonctionner
pour recevoir (18a) le courant de données échelonné du premier réseau (10),
pour modifier le courant de données reçu, par élimination d'au moins une couche de données (22, 24), de telle sorte que le courant de données échelonné modifié reçoive un débit de données modifié qui est inférieur ou égal au second
débit de données, et
pour alimenter le courant de données échelonné modifié vers le second réseau (18b), et
l'unité de connexion au réseau (18) présentant, par ailleurs, les caractéristiques suivantes :
un dispositif (44) destiné à capter des informations sur les conditions de réseau dans le second réseau (12); et
un dispositif (44) destiné à transmettre ces informations, par un canal de couplage réactif, de l'unité de connexion au réseau (18) vers le premier appareil terminal (14), afin que, en réaction à cela, celui-ci règle le nombre des couches de données générées par le codeur (26, 28) et/ou effectue une subdivision d'une couche de données (20) en une pluralité de sous-couches d'échelonnage.

2. Réseau de communication suivant la revendication 1, dans lequel tant le premier que le second appareil terminal (14, 16) présentent tant un codeur qu'un décodeur, d'où est possible une transmission de données bidirectionnelle.

3. Réseau de communication suivant la revendication 1 ou 2, dans lequel le codeur dans l'appareil terminal présente les caractéristiques suivantes:
une pluralité de codeurs partiels (26, 28, 30, 32) pour une pluralité de signaux de source à coder, émettant, pour chaque couche de données (20, 22, 24), des paquets qui leur sont propres (P1, P2, P3) ;
une interface de réseau (36) avec une pluralité de couches d'échelonnage (20, 22, 24) en vue de l'alimentation en série de paquets de données de différentes couches d'échelonnage vers le premier réseau (10) ; et
un multiplexeur (34) destiné à répartir les paquets de données des codeurs partiels sur les couches d'échelonnage ou à multiplexer les paquets générés par les codeurs partiels sur des canaux virtuels séparés.

4. Réseau de communication suivant la revendication 3, dans lequel les couches d'échelonnage ajoutent, à chaque paquet de données (P1, P2, P3) émis, un bloc de données de détermination qui caractérise la couche de données (20, 22, 24) à laquelle appartient le paquet (P1, P2, P3) correspondant.

5. Réseau de communication suivant l'une des revendications précédentes, dans lequel une connexion de l'unité de connexion au réseau (18) au second réseau (12) peut être réglée avec réserve et dans lequel l'unité de connexion au réseau (18) présente, par ailleurs, les caractéristiques suivantes :
un dispositif destiné à déterminer le débit de données modifié, la somme des débits de données des couches de données inférieures devant être inférieure ou égale au second débit de données ; et
un dispositif destiné à réserver le débit de données modifié dans le second réseau.

6. Réseau de communication suivant l'une des revendications 1 à 4, dans lequel une connexion de l'unité de connexion au réseau (18) au second réseau (12) peut être réglée sans réserve et dans lequel l'unité de connexion au réseau (18) présente, par ailleurs, les caractéristiques suivantes :
un dispositif destiné à déterminer le débit de données disponible dans le second réseau ; et
un dispositif destiné à déterminer le débit de données modifié, la somme des débits de données des couches de données inférieures devant être inférieure ou égale au second débit de données.

7. Réseau de communication suivant l'une des revendications précédentes, dans lequel l'unité de connexion au réseau (18) est reliée, du côté de la sortie, à une pluralité de réseaux (12a, 12b, 12c), l'unité de connexion au réseau (18) présentant, par ailleurs, les caractéristiques suivantes:
un dispositif (44) destiné à déterminer le nombre de couches de données pouvant être alimentées vers chaque réseau (12a, 12b, 12c) disposé du côté de la sortie ;
une mémoire-tampon (25) destinée à la mémorisation intermédiaire d'au moins un paquet de données (P1, P2, P3) pour chaque couche de données (20, 22, 24) ;
un dispositif destiné à démultiplexer les paquets de données (P1, P2, P3) en mémoire-tampon dans les couches de données du courant de données échelonné ; et
un dispositif (46) destiné à copier les paquets de données dans les réseaux (12a, 12b, 12c) correspondants reliés du côté de la sortie, compte tenu du nombre déterminé de couches de données pour chaque réseau.

8. Réseau de communication suivant l'une des revendications précédentes, dans lequel l'unité de connexion au réseau (18) est disposée pour transmettre, comme informations sur les conditions de réseau, par le canal de couplage réactif (42), des paramètres de réseau relatifs au débit de données minimal d'un segment de réseau et des informations sur le nombre le plus élevé de couches de données que décode un décodeur présent dans un appareil terminal, au codeur, afin que celui-ci puisse régler de manière dynamique le nombre de couches de données du courant de données échelonné.

9. Réseau de communication suivant l'une des revendications précédentes, dans lequel l'unité de connexion au réseau est disposée pour transmettre, par le canal de couplage réactif (42), les informations sur les conditions de réseau du second réseau (12) au codeur (26, 28) du premier appareil terminal (14), afin que ce dernier adapte, en réaction à cela, une grandeur de paquet du courant de données échelonné, met en oeuvre des possibilités de protection contre des erreurs et/ou utilise des types de codage différents.

10. Réseau de communication suivant l'une des revendications précédentes, dans lequel le signal à coder présente un signal vidéo, les couches de données se différenciant par le nombre d'images omises d'une séquence vidéo, et/ou par le format d'image des différentes images vidéo ; et/ou par la qualité d'image, par exemple le nombre de pixels par image, distorsions dans l'image, différents formats d'image.

11. Réseau de communication suivant l'une des revendications précédentes, dans lequel le signal à coder présente un signal audio, les couches de données se différenciant par la largeur de bande audio du signal codé dans une couche de données (P1, P2, P3).

12. Procédé de transmission d'un signal par deux réseaux (10, 12), disposés en série, permettant des débits de données différents, aux étapes suivantes consistant à :
coder et envoyer un signal à transmettre, pour obtenir un courant de données échelonné (P1, P2, P3), les couches de données se différenciant par leur teneur en informations relatives au signal à coder ;
transmettre le de données échelonné dans le premier réseau (10) à un premier débit de données (10);
recevoir (18a) le courant de données échelonné ;
modifier le courant de données échelonné par élimination d'au moins une couche de données (22, 24) dans une unité de connexion au réseau (18) connecté entre le premier (10) et le second (12) réseau, de telle sorte que le courant de données échelonné modifié reçoive un débit de données modifié qui est inférieur ou égal à un second débit de données, le second débit de données étant inférieur au premier débit de données ;
émettre (18b) le courant de données échelonné modifié au second débit de données ;
transmettre le courant de données échelonné modifié dans le second réseau (12) au second débit de données ;
recevoir et décoder le courant de données échelonné modifié, pour obtenir un signal décodé dont la teneur en informations est plus petite que celle du signal à transmettre ;
capter (44) des informations sur les conditions de réseau dans le second réseau (12),
l'étape du codage et de l'envoi étant réalisée en réaction à ces informations, afin de régler le nombre de couches de données générées lors du codage et/ou de réaliser une subdivision d'une couche de données (20) en une pluralité de sous-couches d'échelonnage.

13. Unité de connexion au réseau (18) aux caractéristiques suivantes :
un dispositif (18a) destiné à recevoir d'un premier réseau (10) un courant de données échelonné qui a été généré par codage par un premier appareil terminal (14) et présentant au moins deux couches de données (20, 22, 24) qui se différencient par leur teneur en informations par rapport à un signal se trouvant à la base d'un courant de données échelonné ;
un dispositif destiné à modifier le courant de données échelonné par élimination d'au moins une couche de données (22, 24) du courant de données échelonné, pour obtenir un courant de données échelonné modifié présentant un débit de données modifié qui est inférieur ou égal à un débit de données prédéterminé ; et
un dispositif (18b) destiné à émettre le courant de données échelonné modifié dans un second réseau (12) ;
un dispositif (44) destiné à capter des informations sur les conditions de réseau dans le second réseau (12) ; et
un dispositif (44) destiné à transmettre ces informations, par un canal de couplage réactif (42), de l'unité de connexion au réseau (18) vers le premier appareil terminal (14), afin que, en réaction à cela, celui-ci règle le nombre des couches de données générées lors du codage et/ou effectue une subdivision d'une couche de données (20) en une pluralité de sous-couches d'échelonnage.

14. Procédé pour adapter le débit de données d'un courant de données échelonné à un débit de données prédéterminé :
recevoir d'un premier réseau (10) un courant de données échelonné qui a été généré par codage par un appareil terminal (14) et qui présente au moins deux couches de données (20, 22, 24) qui se différencient par leur teneur en informations par rapport à un signal se trouvant à la base du courant de données échelonné ;
modifier le courant de données échelonné par élimination d'au moins une couche de données (22, 24) du courant de données échelonné, pour obtenir un courant de données échelonné modifié présentant un débit de données modifié qui est inférieur ou égal à un débit de données prédéterminé ;
émettre le courant de données échelonné modifié au débit de données modifié dans un second réseau (12) ;
capter (44) des informations sur les conditions de réseau dans le second réseau (12) ; et
transmettre ces informations, par un canal de couplage réactif (42), de l'unité de connexion au réseau (18) vers le premier appareil terminal (14), afin que, en réaction à cela, celui-ci règle le nombre des couches de données générées lors du codage et/oú effectue une subdivision d'une couche de données (20) en une pluralité de sous-couches d'échelonnage.
